# EUROPÄISCHE PATENTSCHRIFT

(11) **EP 2 535 627 B1**
(45) Veröffentlichungstag und Bekanntmachung des Hinweises auf die Patenterteilung: **15.02.2017**
(21) Anmeldenummer: 11004844.4
(22) Anmeldetag: 14.06.2011
(51) Int. Cl.: H02G 3/22, F16L 5/04, H02G 3/04

(54) **Brandschutzeinrichtung**
Flame-retardant device
Dispositif de protection anti-incendie

(43) Veröffentlichungstag der Anmeldung: 19.12.2012
(73) Patentinhaber: G + H Isolierung GmbH, 67059 Ludwigshafen (DE)
(72) Erfinder: Adam, Wolfram, 97241 Bergtheim (DE); Wech, Michael, 97318 Kitzingen (DE)
(74) Vertreter: Grünecker Patent- und Rechtsanwälte PartG mbB

(56) Entgegenhaltungen:
- EP-A1- 1 512 434
- EP-A2- 1 180 629
- WO-A1-01/09538
- DE-A1- 4 113 375
- DE-A1-102005 057 736
- DE-A1-102006 001 644
- DE-U1-202005 004 339
- DE-U1-202007 000 727
- GB-A- 2 077 382

## Beschreibung

Die Erfindung bezieht sich auf eine Brandschutzeinrichtung für Durchführungen durch Wandstrukturen.

Derartige Durchführungen sind beispielsweise in Form von Kabelkanälen oder Kabelgehäusen bekannt, die ein rohrförmiges Bauteil mit unterschiedlichem Querschnitt (rund, viereckig oder dgl.) aufweisen, mit deren Hilfe eine Wandstruktur, also beispielsweise eine Gebäudewand, eine Brandmauer oder eine Decke so durchbrochen werden kann, dass im Brandfall ein Durchschlagen des Brandes von einer Seite der Wandstruktur auf die gegenüberliegende Seite verhindert oder so weit wie möglich hinausgezögert wird. Diese Durchführungen enthalten, wie beispielsweise aus der DE 20 2007 018 572 gezeigt, ein rohrförmiges Bauteil, das über Isolationsmaterial in der Öffnung der Wandstruktur sitzt.

Die EP 1 512 434 bezieht sich auf ein Brandschutzelement zur Durchführung von Rohrleitungen, insbesondere Abwasserrohren, durch ein Bauteil, insbesondere eine Decke, eine Wand oder ähnliche Bauteile.

Die DE 20 2005 004 339 bezieht sich auf eine Rohrdurchführung aus mindestens zwei Rohrteilschalen aus Brandschutzmaterial, wobei die Rohrteilschalen an ihrer Außenseite eine Folie aufweisen, die die beiden Rohrteilschalen klappbar verbindet.

Die WO 01/09538 bezieht sich auf ein Versiegelungssystem mit einem zylindrischen Schlauch oder Rohr aus einem Material, das geeignet ist, sich unter Einfluss von Wärme zu deformieren.

Die DE 20 2007 000 727 U1 bezieht sich auf eine feuerbeständige Ausführung von Durchgängen für Rohrleitungen und dergleichen durch Wände, Fußböden etc., wobei an der Stelle des Durchgangs eine das Leitungsrohr umschließende Manschette mit einem intumeszierenden Material versehen ist, das im Brandfall im Folge des Temperaturanstiegs aufquillt und damit den Durchgang feuerbeständig abschließt.

Die EP 1 180 629 bezieht sich auf eine Brandschutzmanschette für Rohre, Kabel und dergleichen.

Die DE 10 2006 001 644 A1 offenbart eine flexible Matte 7 wobei die flexible Matte 7 ein flexibles Trägermaterial enthält, bevorzugt ein textilähnliches Material aus unbrennbaren Fasern, beispielsweise ein Glasfasergewebe oder ein Glasfaservlies. Das Trägermaterial ist mit einem handelsüblichen Dämmschichtbildner ein- oder beidseitig beschichtet, der unter Wärmeeinwirkung aufschäumt.

Im Brandfall besteht jedoch die Gefahr, dass das rohrförmige Bauteil verlagert wird. Dies ist besonders dann gravierend, wenn sich das rohrförmige Bauteil beispielsweise in Form einer Rohrleitung für gasförmige oder flüssige Medien oder in Form eines langgestreckten Kabelkanals weit über die Durchführung durch die Wandstruktur in den freien Raum hineinerstreckt. Versagen dann im Brandfall die Halterungen der Rohrleitungen im Brandraum, so können die rohrförmigen Bauteile nach unten fallen und werden aus der Wanddurchführung herausgezogen, schräggestellt oder angeknickt. Dann öffnet sich auf der Oberseite der Durchführung zwischen dem rohrförmigen Bauteil und der Isolierung ein Spalt, während die Isolierung an der unteren Seite zusammengedrückt und gegebenenfalls ebenfalls verschoben wird. Dadurch ist der Weg für Rauch und im Extremfall auch für das Durchschlagen des Brandes frei.

Der Erfindung liegt die Aufgabe zugrunde, eine Brandschutzeinrichtung bereitzustellen, mit dem dieses Versagen des Brandschutzes der Durchführung verhindert wird.

Die Aufgabe wird durch die im Anspruch 1 angegebenen Merkmale gelöst.

Durch die für die erfindungsgemäße Brandschutzeinrichtung eingesetzte Ausgleichseinrichtung wird ein Mittel geschaffen, eine Verlagerungsbewegung des Bauteils relativ zur Wandstruktur auszugleichen, so dass der Brandschutz wesentlich verbessert wird. Bewegt sich im Brandfall das Bauteil relativ zur Wandstruktur, d.h. wird das Bauteil verscho-ben oder abgewinkelt oder eingeknickt, so kommt das Brandschutzmaterial der Ausgleichseinrichtung in Kontakt mit den höheren Temperaturen des Brandraums und schäumt auf. Dadurch wird jeder sich eventuell dort öffnende Spalt ausgefüllt und abgedichtet.

Vorteilhafte Weiterbildungen der Erfindung sind den Unteransprüchen zu entnehmen.

Um wirksam zu werden, sollte sich die mit Brandschutzmaterial versehene Ausgleichseinrichtung an denjenigen Stellen befinden, an denen damit zu rechnen ist, dass sich bei einer Verlagerungsbewegung des Bauteils Spalten öffnen, wobei dies insbesondere in der Nähe der Außenseite der Wandstruktur der Fall ist. Wenn die Ausgleichseinrichtung mitnehmbar am Bauteil befestigt ist, so befindet sie sich bei Verlagerung des Bauteils genau am Spalt.

Bevorzugt enthält die Ausgleichseinrichtung ein auf der Außenseite des Bauteils angeordnetes Rohrelement, wobei als Rohrelement ein Element mit Axialerstreckung jedes beliebigen Querschnitts und bevorzugt eines mit einem der Außenseite des Bauteils angepassten Querschnitt definiert werden soll.

Die Ausgleichseinrichtung sollte bevorzugt an die zu erwartende Verschiebebewegung im Brandfall angepasst sein, die sich beispielsweise ergibt, wenn alle weiteren Rohrhalterungen im Brandraum versagen und das Bauteil so weit abknickt, dass es im Brandraum auf dem Boden aufliegt. Die Ausgleichseinrichtung soll eine axiale Länge aufweisen, die auch diesen Extremfall abdeckt.

Eine weitere mögliche Verlagerungsbewegung des Bauteils ist ein Abknicken oder Kippen des Bauteils relativ zur Wandstruktur. Um diese Verlagerungsbewegung abzufangen, sollte die Ausgleichseinrichtung zumindest biegbar und gegebenenfalls auch flexibel ausgebildet sein.

Bevorzugt wird die Ausgleichseinrichtung aus zwei im Abstand voneinander angeordneten Rohr-Elementteilen gefertigt, die durch wenigstens einen biegbaren Verbinder miteinander verbunden sind, so dass sich die beiden Rohr-Elementteile relativ zueinander bewegen können. Bevorzugt sind die Verbinder als Metallstreifen ausgebildet.

Das Brandschutzmaterial hingegen erstreckt sich sowohl über die Rohr-Elementteile als auch den dazwischenliegenden Abstand, und zwar an der Außen- und der Innenseite der Rohr-Elementteile.

Bevorzugt ist die Schichtdicke des aufschäumbaren Brandschutzmaterials an der den Bauteilen zugewandten Innenseite höher als an der Außenseite.

Bevorzugt wird als Brandschutzmaterial eine Bandage aus einem flexiblen Träger und einer beidseitigen Beschichtung mit intumeszierendem Brandschutzmaterial eingesetzt, das sich einfach und in der benötigten Schichtdicke problemlos verarbeiten lässt.

Die Erfindung eignet sich besonders für mit einer Rohrisolierung und einer Ummantelung versehene Rohre, bei denen die Ausgleichseinrichtung fest mit der Ummantelung verbunden wird.

Um beide Seiten einer Durchführung wie erwähnt zu sichern, enthält die Brandschutzeinrichtung bevorzugt auf jeder der beiden Seiten der Wandstruktur eine Ausgleichseinrichtung.

Die erfindungsgemäße Ausgleichseinrichtung kann auch nachträglich noch aufgebracht werden, wobei die Ausgleichseinrichtung nachgekauft werden kann.

Die Erfindung wird nachfolgend anhand der Figuren näher erläutert. Es zeigen:
- Fig. 1: eine schematische Darstellung eines bevorzugten Ausführungsbeispiels einer Durchführung mit einer erfindungsgemäßen Brandschutzeinrichtung,
- Fig. 2: eine perspektivische Darstellung einer Ausgleichseinrichtung,
- Fig. 3: einen Längsschnitt durch die Ausgleichseinrichtung nach Fig. 2,
- Fig. 3A: das Detail A aus Fig. 3, und
- Fig. 4: eine Darstellung des Funktionsprinzips der erfindungsgemäßen Brandschutzeinrichtung.

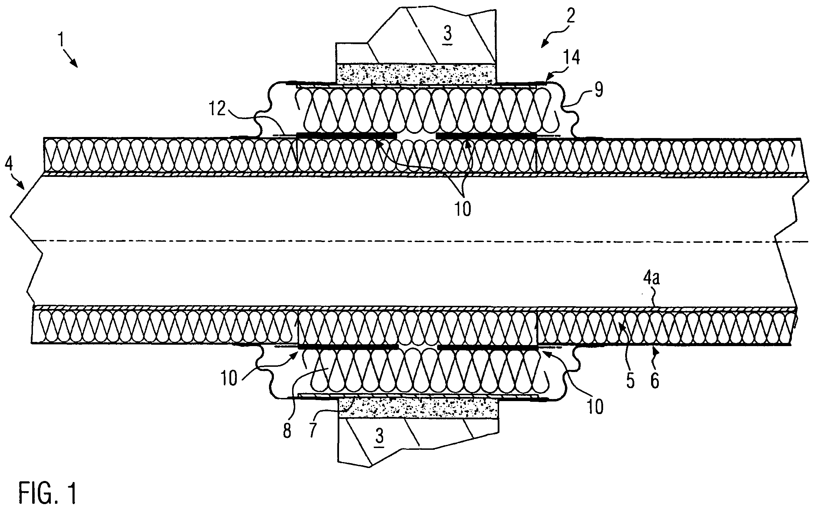

Fig. 1 zeigt in geschnittener, schematischer Darstellung eine erfindungsgemäße Brandschutzeinrichtung 1 für eine Durchführung 2 durch eine Wandstruktur 3, die hier als Gebäudewand dargestellt ist, jedoch auch jede andere Wandstruktur (Decke, Fußboden, Ein- bzw. Ausgänge, von Anlagen oder dgl.) sein kann.

Durch die Durchführung 2 erstreckt sich ein langgestrecktes, hier rohrförmiges Bauteil 4, das jedes Bauteil sein kann, das sich durch eine Wandstruktur erstreckt, also beispielsweise hohle Bauteile wie Rohre, Kanäle oder Konstruktionsteile aus Vollmaterial wie Träger, mit den unterschiedlichsten Querschnitten. Im dargestellten Ausführungsbeispiel enthält das Bauteil 4 ein Mediumrohr 4a, das einen im Wesentlichen kreisförmigen Querschnitt aufweist und mit einer Außenisolierung 5 versehen ist, die in üblicher Weise mit einer Ummantelung 6 aus beispielsweise Stahlblech abgedeckt ist. Die Stahlblechabdeckung endet im dargestellten Ausführungsbeispiel vor der Durchführung 2 und setzt sich nach der Durchführung wieder fort, d.h. in einem Abschnitt des Bauteils 4 innerhalb der Durchführung 2 liegt die Isolierung 5 frei.

Die Durchführung 2 ist mit dem üblichen Mauerrohr 7 ausgekleidet, das beidseitig über die Wandstruktur 3 vorsteht. Der Durchmesser bzw. die Weite der Durchführung 2 ist größer als die des Bauteils 4 mit Außenisolierung 5 und Ummantelung 6, wobei zwischen dem Mauerrohr 7 und der Ummantelung 6 eine weitere Isolierung 8, beispielsweise gestopfte Mineralwolle, angeordnet ist. Der durch die Isolierung 8 ausgefüllte Zwischenraum zwischen dem Mauerrohr 7 und der Ummantelung 6 wird beidseitig durch die üblichen Manschetten 9 nach außen hin abgedeckt, die mit ihrer einen Seite am Mauerrohr 7 und mit ihrer anderen Seite an der Ummantelung 6 befestigt sind und den Spalt mit der Isolierung 8 nach außen abdichten.

Die erfindungsgemäße Brandschutzsicherung 1 enthält eine Ausgleichseinrichtung 10, die im Bereich der Durchführung 2 an allen Seiten vorgesehen sein kann, bei denen die Entstehung eines Brandes zufürchten ist; im vorliegenden Fall an beiden Seiten der Wandstruktur 3.

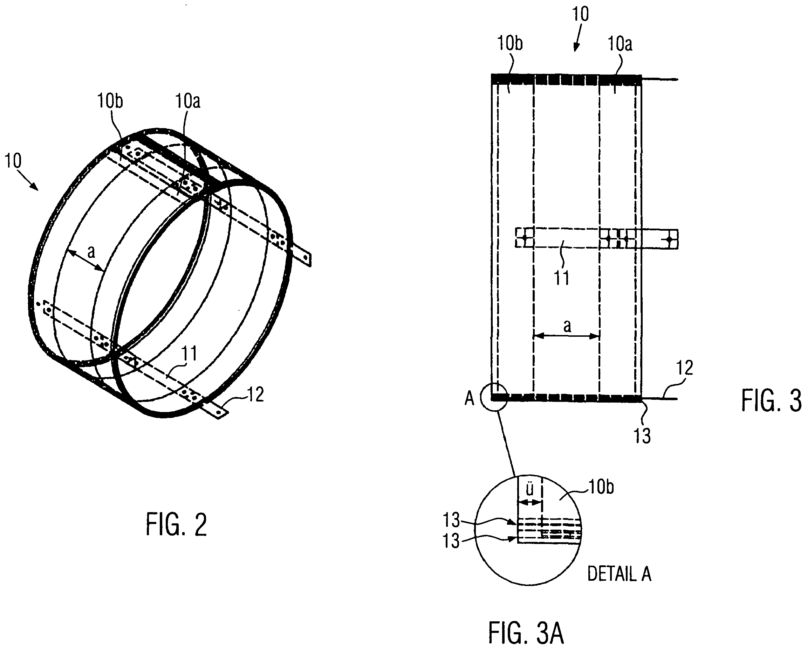

Wie auch in Verbindung mit den Fig. 2 und 3 ersichtlich, ist die Ausgleichseinrichtung 10 rohrförmig ausgebildet und mit ihrem Innendurchmesser bzw. ihrer Innenweite auf den Außendurchmesser bzw. die Außenweite des Bauteils 4 so abgestimmt, dass die Ausgleichseinrichtung 10 auf dem Bauteil 4 aufgebracht werden kann und dort am Bauteil 4 anliegt.

Die Ausgleichseinrichtung 10 besteht aus zwei, bevorzugt im Wesentlichen identischen, Rohr-Elementteilen 10a und 10b, die im Abstand a koaxial zueinander angeordnet sind. Dieser Abstand a wird durch biegbare Verbinder 11 aufrechterhalten, die mit beiden Elementteilen 10a, 10b fest verbunden, beispielsweise vernietet sind. Die Verbinder 11 bestehen bevorzugt aus dünnen Metallstreifen, die eine wesentlich geringere mechanische Festigkeit aufweisen als das Bauteil 4 und sich bevorzugt wesentlich eher als das Bauteil 4 verbiegen, so dass sich die beiden Elementteile 10a, 10b relativ zueinander bewegen können. Auch wird durch eine flexible Ausgestaltung der Verbinder 11 bewirkt, dass sich die Elementteile 10a, 10b in jede Position bewegen können, ohne dass die Funktion beeinträchtigt wird.

Mit einem der Elementteile (dem Elementteil 10a) sind weiterhin Befestigungsmittel 12 verbunden, mit denen die Ausgleichseinrichtung 10 einseitig am Bauteil 4 befestigt werden kann. Das andere Rohrelementteil 10b ist nur mit dem ersten Rohr-Elementteil 10a verbunden und sitzt ohne feste Verbindung auf dem Bauteil 4. Die Verbindungsmittel 12 bestehen bevorzugt aus einer Verlängerung des Verbinders 11 in Axialrichtung über das Rohr-Elementteil 10a hinaus.

Wie insbesondere Fig. 3A zeigt, ist die Ausgleichseinrichtung 10 mit einem Brandschutzmaterial 3 bedeckt. Das Brandschutzmaterial 13 erstreckt sich in Axialrichtung durchgehend über die Rohr-Elementteile 10a, 10b und den Abstand a und reicht über die nach außen weisenden Kanten der Elementteile 10a, 10b mit einem Überstand ü hinaus. Dies ist am einfachsten unter Einsatz einer Bandage zu erreichen, die aus einem flexiblen Trägermaterial mit beidseitiger Beschichtung aus einem intumeszierenden, d.h. im Brandfall aufschäumenden, Material besteht. Eine derartige Bandage ist im Handel unter der Bezeichnung PYROTAM-SH^{®}-Bandage erhältlich. Diese weist eine Dicke von etwa 1,1 mm auf.

Die Schichtdicke auf der Außen- und der Innenseite der Ausgleichseinrichtung 10 ist bevorzugt je nach Dicke der Dämmung und/oder Größe der Ummantelung (Hüllrohr) unterschiedlich, wobei auf der Innenseite eine höhere Schichtdicke des Brandschutzmaterials 13 vorgesehen ist als auf der Außenseite, wobei auch dies durch eine unterschiedliche Anzahl von Lagen der obenbeschriebenen Bandage erreicht werden kann.

Ein weiteres intumeszierendes Material 14, aufgebracht auf eine Matte oder einen anderen flexiblen Träger, ist außen auf dem Überstand des Mauerrohrs 7 über die Wandstruktur 3 beidseitig der Durchführung 2 vorgesehen.

Die erfindungsgemäße Brandschutzeinrichtung wird montiert, in dem, wie Fig. 1 zeigt, jeweils eine Ausgleichseinrichtung 10 auf beiden Seiten der Durchführung 2 auf dem Bauteil 4 aufgebracht wird, und zwar derart, dass die Ausgleichseinrichtung 10 in der Nähe der Begrenzungsfläche der Wandstruktur 3 und bevorzugt etwa zur Hälfte in der Wandstruktur 3 und zur Hälfte außerhalb der Wandstruktur 3 zu liegen kommt. Die axiale Länge der Ausgleichseinrichtung 10 ist gleich oder größer als der theoretisch berechnete Schubweg des Bauteils 4 im Brandfall in axialer Richtung. Die Ausgleichseinrichtung 10 wird an den außerhalb der Wandstruktur 3 liegenden Enden fest mit dem Bauteil 4 verbunden, wobei hier im dargestellten Ausführungsbeispiel die Ausgleichseinrichtung 10 mit ihren Verbindungsmitteln 12 an das Ende der Ummantelung 6 angebracht wird, so dass die Rohr-Elementteile 10a, 10b im Wesentlichen in axialer Verlängerung zur Ummantelung 6 zu liegen kommen. Das andere Ende, d.h. das Rohr-Elementteil 10b, sitzt ohne feste Verbindung auf dem Bauteil und wird durch eine Bewegung des ersten Elementteils 10a in Axialrichtung mitgenommen.

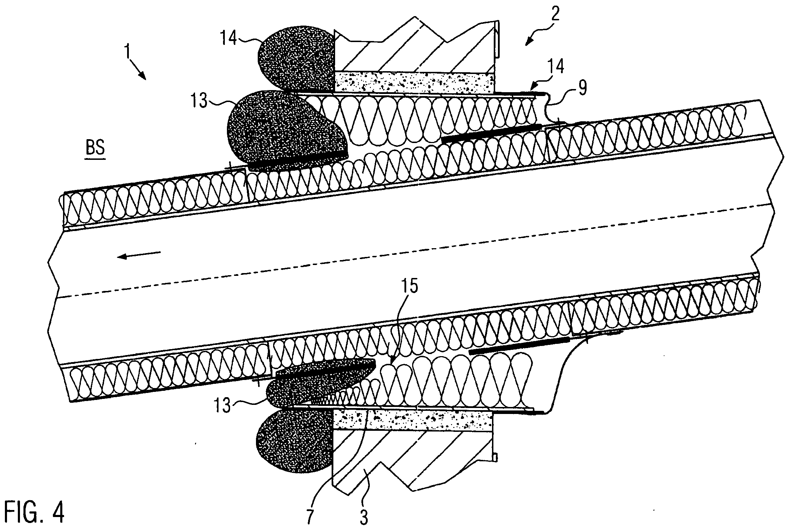

Fig. 4 zeigt das Verhalten der erfindungsgemäßen Brandschutzeinrichtung im Brandfall. Im dargestellten Ausführungsbeispiel hat auf der Brandseite BS die Halterung für das Bauteil 4 versagt, so dass sich das Bauteil 4 in der Durchführung 2 nach unten geneigt hat und aus der Durchführung 2 herausgezogen wurde. Die Manschette 9 ist an dieser Seite gerissen, so dass Rauch und Flammen einen ungehinderten Zugang zu einem sich dadurch auftuenden Spalt 15 hätten, wenn die erfindungsgemäße Brandschutzeinrichtung 1 nicht vorgesehen wäre. Wie Fig. 2 zeigt, sind beide Brandschutzmaterialien 13, 14 auf der Brandseite BS aufgeschäumt, wobei das Brandschutzmaterial 13 der Ausgleichseinrichtung 10 den Spalt von der Ausgleichseinrichtung 10 bis zum Mauerrohr 7 ausfüllt und die Bauteilisolierung 5 nach unten komprimiert, um auch hier eine Abdichtung zu erreichen. Das Brandschutzmaterial 13 der Ausgleichseinrichtung 10 ist weiterhin so bemessen, dass es im aufgeschäumten Falle einen Anschluss an das Brandschutzmaterial 14 schafft, das auf der Außenseite des Mauerrohrs am Überstand aufgebracht ist, so dass die Durchführung 2 auch bei Verlagerungsbewegungen des Bauteils 4 vollständig abgedichtet ist.

Im dargestellten Ausführungsbeispiel ist die zweite Ausgleichsvorrichtung an der zur Brandseite gegenüberliegenden Seite unverändert und bildet dort eine Reserve, die anspricht, sollten sich noch heiße Gase oder Flammen den Weg in die Durchführung 2 gebahnt haben.

Durch die flexible bzw. biegbare Verbindung der beiden Rohr-Elementteile 10a, 10b wird auch derjenige Fall abgefangen, bei dem das Bauteil sich am Ausgang der Durchführung 2 nach unten biegt. Diese Biegung wird durch die Verbinder 11 abgefangen, ohne dass die koaxiale Ausrichtung die Rohr-Elementteile 10a, 10b zur Außenseite des Bauteils 4 verändert wird.

In praktischen Versuchen konnte mit der erfindungsgemäßen Brandschutzeinrichtung eine Schubstrecke von 60 mm und ein Kippwinkel von 8° bis 9° ohne Probleme abgefangen werden.

Die erfindungsgemäße Brandschutzeinrichtung kann an die unterschiedlichsten Anwendungszwecke angepasst werden. So ist es beispielsweise bei bestimmten Bauteilen nicht notwendig, auch die Innenseite oder die Außenseite des Ausgleichselementes zu beschichten bzw. die Beschichtungsstärken unterschiedlich zu gestalten. Auch ist eine Beschichtung außen mit einer höheren Beschichtungsdicke als innen möglich.

## Patentansprüche

1. Brandschutzeinrichtung (1) für eine mit einer Isolierung (8) ausgekleidete Durchführung (2) für ein Bauteil (4) durch eine Wandstruktur (3), wobei eine zwischen dem Bauteil (4) und der Isolierung (8) anordenbare, mit im Brandfall aufschäumendem Brandschutzmaterial (13) versehene Ausgleichseinrichtung (10) für eine Verlagerungsbewegung des Bauteils (4) relativ zur Wandstruktur (3) vorgesehen ist;
**dadurch gekennzeichnet, dass** als Brandschutzmaterial (13) eine Bandage aus einem Träger und einer beidseitigen Beschichtung mit intumeszierendem Brandschutzmaterial eingesetzt wird; wobei die Ausgleichseinrichtung (10) auf ihrer dem Bauteil (4) zuwendbaren Innenseite eine höhere Schichtdicke des aufschäumbaren Brandschutzmaterials (13) aufweist, als an ihrer Außenseite.

2. Brandschutzeinrichtung nach Anspruch 1, **dadurch gekennzeichnet, dass** die Ausgleichseinrichtung (10) in der Nähe der Außenseite der Wandstruktur (3) am Bauteil (4) befestigt ist.

3. Brandschutzeinrichtung nach Anspruch 1 oder 2, **dadurch gekennzeichnet, dass** die Ausgleichseinrichtung (10) ein auf der Außenseite des Bauteils (4) angeordnetes Rohrelement (10a, 10b) aufweist.

4. Brandschutzeinrichtung nach einem der Ansprüche 1 bis 3, **dadurch gekennzeichnet, dass** die Ausgleichseinrichtung (10) zum Ausgleich einer Verschiebebewegung eine axiale Länge aufweist, die gleich oder größer als ein vorbestimmter axialer Verschiebungsweg des Bauteils (4) relativ zur Isolierung (8) ist.

5. Brandschutzeinrichtung nach einem der Ansprüche 1 bis 4, **dadurch gekennzeichnet, dass** die Ausgleichseinrichtung (10) zum Ausgleich einer Kippbewegung des Bauteils (4) biegbar ausgebildet ist.

6. Brandschutzeinrichtung nach einem der Ansprüche 1 bis 5, **dadurch gekennzeichnet, dass** die Ausgleichseinrichtung (10) wenigstens einen biegbaren Verbinder (11) und zwei im Abstand (a) voneinander angeordnete Rohr-Elementteile (10a, 10b) aufweist, die durch den Verbinder (11) miteinander verbunden sind.

7. Brandschutzeinrichtung nach Anspruch 6, **dadurch gekennzeichnet, dass** der Verbinder (11) als Metallstreifen ausgebildet ist.

8. Brandschutzeinrichtung nach Anspruch 6 oder 7, **dadurch gekennzeichnet, dass** sich das Brandschutzmaterial (13) über die Außen- und Innenseiten der Rohr-Elementteile (10a, 10b) und den dazwischenliegenden Abstand (a) erstreckt.

9. Brandschutzeinrichtung nach einem der Ansprüche 1 bis 8, **dadurch gekennzeichnet, dass** das Bauteil (4) ein mit einer Rohrisolierung (5) und einer Ummantelung (6) versehenes Rohr (4a) ist und die Ausgleichseinrichtung (10) fest mit der Ummantelung (6) verbunden ist.

10. Durchführung (2) eines rohrförmigen Bauteils (4) durch eine Wandstruktur (3), versehen mit einer Brandschutzeinrichtung (1) nach einem der Ansprüche 1 bis 9.

11. Durchführung nach Anspruch 10, **dadurch gekennzeichnet, dass** die Brandschutzeinrichtung (1) jeweils eine auf beiden Seiten der Wandstruktur (3) angeordnete Ausgleichseinrichtung (10) aufweist.

## Claims

1. Fire protection device (1) for a feedthrough (2) lined with an insulation (8) and used for a component (4) through a wall structure (3), wherein a compensating device (10) which is adapted to be arranged between the component (4) and the insulation (8) and is provided with fire protection material (3), which is foaming in case of fire, is provided for a displacement movement of the component (4) relative to the wall structure (3), **characterized in that** a bandage made of a support and a coating on both sides with intumescent fire protection material is used as the fire protection material (13), wherein the compensating device (10) on its inside which is adapted to face the component (4) has a greater layer thickness of the foamable fire protection material (13) than on its outside.

2. Fire protection device according to claim 1, **characterized in that** the compensating device (10) is fastened near the outside of the wall structure (3) to the component (4).

3. Fire protection device according to claim 1 or 2, **characterized in that** the compensating device (10) comprises a tubular element (10a, 10b) arranged on the outside of the component (4).

4. Fire protection device according to any one of claims 1 to 3, **characterized in that** the compensating device (10) for compensating a displacement movement has an axial length that is equal to or greater than a predetermined axial displacement path of the component (4) relative to the insulation (8).

5. Fire protection device according to any one of claims 1 to 4, **characterized in that** the compensating device (10) is made flexible to compensate a tilt movement of the component (4).

6. Fire protection device according to any one of claims 1 to 5, **characterized in that** the compensating device (10) comprises at least one flexible connector (11) and two tubular element parts (10a, 10b) which are spaced apart at a distance (a) and are interconnected by the connector (11).

7. Fire protection device according to claim 6, **characterized in that** the connector (11) is configured as a metal strip.

8. Fire protection device according to claim 6 or 7, **characterized in that** the fire protection material (13) extends over the insides and outsides of the tubular element parts (10a, 10b) and the interposed distance (a).

9. Fire protection device according to any one of claims 1 to 8, **characterized in that** the component (4) is a tube (4a) provided with a tube insulation (5) and a sheathing (6) and the compensating device (10) is firmly connected to the sheathing (6).

10. Feedthrough (2) of a tubular component (4) through a wall structure (3), provided with a fire protection device (1) according to any one of claims 1 to 9.

11. Feedthrough according to claim 10, **characterized in that** the fire protection device (1) comprises a respective compensating device (10) arranged at both sides of the wall structure (3).

## Revendications

1. Dispositif de protection incendie (1) pour une traversée de passage (2) garnie d'une isolation (8) et destinée à une pièce (4) traversant une structure de mur (3), un dispositif de compensation (10), qui peut être agencé entre la pièce (4) et l'isolation (8) et qui comporte un matériau de protection incendie (13) se transformant en mousse en cas d'incendie, étant prévu pour le cas d'un mouvement de déplacement de la pièce (4) par rapport à la structure de mur (3),
**caractérisé en ce que** concernant le matériau de protection incendie (13), on utilise un bandage constitué d'un support et d'un revêtement sur ses deux faces en un matériau de protection incendie intumescent, le dispositif de compensation (10) présentant sur son côté intérieur dirigé vers ladite pièce (4), une épaisseur de couche plus importante du matériau de protection incendie (13) que sur son côté extérieur.

2. Dispositif de protection incendie selon la revendication 1, **caractérisé en ce que** le dispositif de compensation (10) est fixé à la pièce (4) au voisinage du côté extérieur de la structure de mur (3).

3. Dispositif de protection incendie selon la revendication 1 ou la revendication 2, **caractérisé en ce que** le dispositif de compensation (10) comporte un élément tubulaire (10a, 10b) agencé sur le côté extérieur de la pièce (4).

4. Dispositif de protection incendie selon l'une des revendications 1 à 3, **caractérisé en ce que** le dispositif de compensation (10), en vue de compenser un mouvement de coulissement, présente une longueur axiale, qui est égale ou supérieure à un déplacement de coulissement axial prédéterminé de la pièce (4) par rapport à l'isolation (8).

5. Dispositif de protection incendie selon l'une des revendications 1 à 4, **caractérisé en ce que** le dispositif de compensation (10) est d'une configuration flexible en vue de compenser un mouvement de basculement de la pièce (4).

6. Dispositif de protection incendie selon l'une des revendications 1 à 5, **caractérisé en ce que** le dispositif de compensation (10) comporte au moins un élément de liaison flexible (11) et deux parties d'éléments tubulaires (10a, 10b) agencées à une distance d'espacement (a) l'une de l'autre et reliées l'une à l'autre par l'élément de liaison (11).

7. Dispositif de protection incendie selon la revendication 6, **caractérisé en ce que** l'élément de liaison (11) est réalisé sous la forme d'un ruban métallique.

8. Dispositif de protection incendie selon la revendication 6 ou la revendication 7, **caractérisé en ce que** le matériau de protection incendie (13) s'étend pardessus les côtés extérieurs et intérieurs des parties d'éléments tubulaires (10a, 10b) et le long de la distance d'espacement (a) située entre celles-ci.

9. Dispositif de protection incendie selon l'une des revendications 1 à 8, **caractérisé en ce que** la pièce (4) est un tube (4a) muni d'une isolation de tube (5) et d'une enveloppe périphérique (6), et le dispositif de compensation (10) est relié de manière fixe à l'enveloppe périphérique (6).

10. Traversée de passage (2) d'une pièce tubulaire (4) au travers d'une structure de mur (3), munie d'un dispositif de protection incendie (1) selon l'une des revendications 1 à 9.

11. Traversée de passage selon la revendication 10, **caractérisée en ce que** le dispositif de protection incendie (1) comporte un dispositif de compensation (10) agencé respectivement sur chacun des deux côtés de la structure de mur (3).
